# EUROPEAN PATENT APPLICATION

(11) **EP 2 482 487 A1**
(43) Date of publication of application: **01.08.2012**
(21) Application number: 11734352.5
(22) Date of filing: 13.01.2011
(51) Int. Cl.: H04L 9/08

(54) **METHOD AND SYSTEM FOR DERIVING AIR INTERFACE ENCRYPTION KEYS**

(30) Priority: 21.01.2010 CN 201010001080
(71) Applicant: ZTE Corporation, Shenzhen, Guangdong 518057 (CN)
(72) Inventor: FENG, Chengyan, Guangdong 518057 (CN); GAN, Lu, Guangdong 518057 (CN)
(74) Representative: Gervasi, Gemma
(86) International application number: PCT/CN2011/070231
(87) International publication number: WO 2011/088770

(57) **Abstract**

The present invention discloses a method for deriving an air interface key, and the method includes: an enhanced Radio Network Controller (RNC+) calculating a key according to an existing parameter of a universal mobile telecommunication system network, and the existing parameter including a fresh random number (FRESH) generated by the RNC+. The present invention further discloses an enhanced radio network controller and a core network device. The present invention can not only solve the security problem of generating the key and improve the system security to reduce security risk, but also can decrease the system overhead and complexity to improve the user experience and the operational efficiency of the operators.

## Description

### Technical Field

The present invention relates to the communication field, and more specifically, to a method and system for deriving an air interface key.

### Background of the Related Art

The 3rd Generation Partnership Project (3GPP) adopts the Orthogonal Frequency Division Multiplexing (OFDM) technology and Multiple-Input Multiple-Output (MIMO) technology to complete a High Speed Packet Access+ (HSPA+) of future evolution road of the High Speed Downlink Packet Access (HSDPA) and High Speed Uplink Packet Access (HSUPA) in the Release 7 (Rel 7). The HSPA+ is an enhanced technology of the 3GPP HSPA (including the HSDPA and HSUPA), which provides a path with low complexity and low cost for the HSPA operators smoothly evolving from the HSPA to a Long Term Evolution (LTE).

The HSPA+ promotes the peak data rate and spectrum efficiency by adopting technologies such as higher order modulation (e.g. downlink 64 Quadrature Amplitude Modulation (QAM) and uplink 16 QAM), MIMO and a combination of the higher order modulation and MIMO and so on. On the other hand, to better support a packet service, the HSPA+ also adopts a series of other enhancement technologies to achieve the object of increasing user capability, reducing time delay and terminal power consumption, better supporting Voice over IP (VOIP) communication and promoting multicast/broadcast ability of the system and so on.

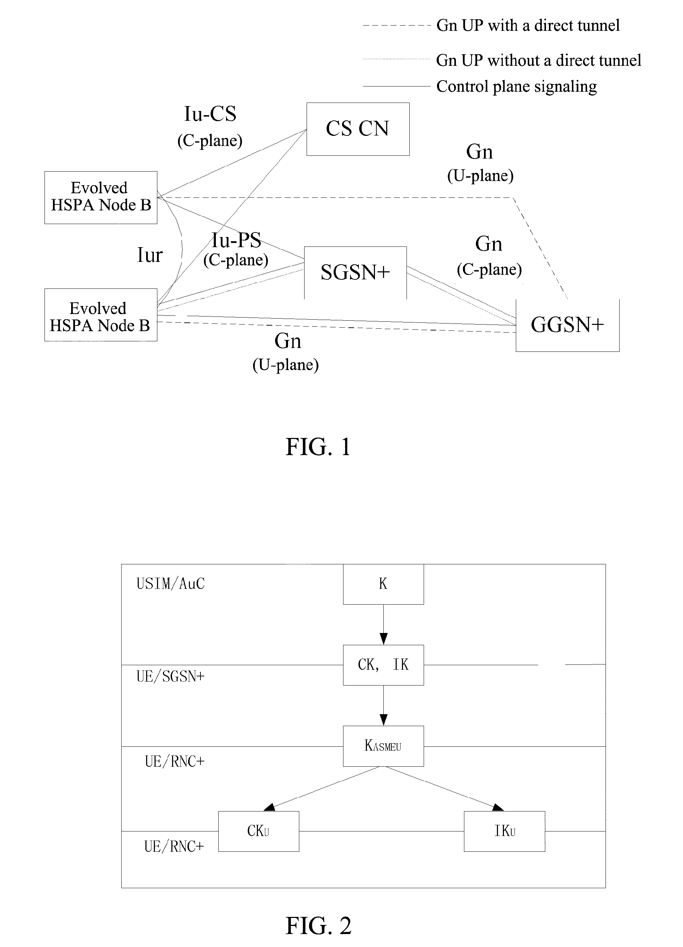

Compared with HSPA, the HSPA+ puts the function of Radio Network Controller (RNC) in the system architecture under a base station Node B to form completely flat radio access network architecture as shown in FIG. 1. At the moment, the Node B which has integrated a complete RNC function is called as an Evolved HSPA Node B or is called as an enhanced Node B (Node B+) for short. SGSN+ is a Service General Packet Radio System (GPRS) Support Node (SGSN) which has been upgraded to support a HSPA+ function. ME+ is the user terminal equipment supporting the HSPA+ function. An evolved HSPA system can use the 3GPP Rel-5 and subsequent releases of the air interface, and it does not make any modification to the HSPA services of the air interface. After using this scheme, each Node B+ becomes one node equivalent to the RNC and possesses an Iu-PS interface to be able to directly connect with a Packet Switching (PS) Core Network (CN), and an Iu-PS user plane is terminated at the SGSN, wherein, if the network supports a direct tunnel function, the Iu-PS user plane also can be terminated at a Gateway GPRS Support Node (GGSN). Communications between the evolved HSPA Nodes B are carried out via an Iur interface. The Node B+ has an independent networking ability and supports a complete mobility function including inter-system handover and intra-system handover.

After being flatted, user plane data can directly reach the GGSN without going through the RNC, which means that functions of encryption and integrity protection of the user plane must be shifted forward to the Node B+. Currently, the structure of HSPA+ security key hierarchy raised by Ericsson is as shown in FIG. 2. Wherein, definitions of a Key (K), Ciphering Key (CK) and Integrity Key (IK) are identical with that in an Universal Mobile Telecommunications System (UMTS), that is, the K is a key stored in an Authentication Center (AuC) and Universal Subscriber Identity Module (USIM), and the CK and IK are respectively a traditional ciphering key CK and a traditional integrity key IK calculated by the K when the user equipment and Home Subscriber Server (HSS) perform Authentication and Key Agreement (AKA). In the UMTS, RNC uses the CK and IK to perform encryption and integrity protection on the data. As all functions of the RNC are put under the base station Node B+ in the HSPA+ architecture, the encryption and decryption are both required to be performed at the Node B+, however, the Node B+ is located in an unsafe environment and security is not very good. Therefore, the HSPA+ introduces one key hierarchy similar to an Evolved Universal Terrestrial Radio Access Network (EUTRAN), namely, an Universal Terrestrial Radio Access Network (UTRAN) Key Hierarchy. In the structure of the UTRAN key hierarchy, an intermediate key K_{ASMEU} is a key newly introduced by the HSPA+ and deduced by the CK and IK to be generated. Furthermore, the K_{ASMEU} generates a CKᵤ and an IKᵤ, wherein, the CKᵤ is used to encrypt user plane data and control plane signaling, and the IKᵤ is used to perform integrality protection on the control plane signaling.

In a Wideband Code Division Multiple Access (WCDMA) system, the concepts of Serving RNC (SRNC)/Drift RNC (DRNC) are generated due to the introduction of the Iur interface. The SRNC and DRNC are regarding certain specific User Equipment (UE) and they are a logical concept. In short, with regard to a certain UE, in a connection between the UE and CN, a RNC which is directly connected with the CN and controls all resources of the UE is called the SRNC of the UE; in the connection between the UE and CN, the RNC which is not connected with the CN and provides resources only for the UE is called the DRNC of the UE. The UE in connection state must have only one SRNC, and may have no DRNC or multiple DRNCs.

In the existing technology, there is a method for deriving the K_{ASMEU}, CKᵤ and IKᵤ by using random number or counter value. However, the random number and counter value need to be transferred between the network and user, and it is required to modify the existing UMTS protocol, which undoubtedly increases the system overhead and complexity.

### Summary of the Invention

The technical problem to be solved by the present invention is to provide a method and system for deriving an air interface key, which reduces the security risk and the system overhead.

It should be noted that a Node B+ can be regarded as a combination of Nobe B and RNC in HSPA+. The Nobe B and RNC is one physical entity, but are still two different logic entities. Therefore, the Node B+ supporting HSPA+ key hierarchy according to the present invention can also be equivalent to an upgraded RNC in UMTS. In order to distinguish the upgraded RNC, it is also called a RNC+.

In order to solve the above problem, a method for deriving an air interface key is provided by the present invention, and the method comprises:
an enhanced Radio Network Controller (RNC+) calculating a key according to an existing parameter of a universal mobile telecommunication system network, and the existing parameter of the universal mobile telecommunication system network comprising a fresh random number (FRESH) generated by the RNC+.

Before the step of the RNC+ calculating the key, the method further comprises: a core network node sending an intermediate key K_{ASMEU} to the RNC+ through a key distribution message;
the step of the RNC+ calculating the key comprises: the RNC+ calculating a ciphering key CKᵤ and an integrity key IKᵤ according to an intermediate key and the existing parameter of the universal mobile telecommunication system network.

Wherein, the key distribution message is a safe mode command message.

Wherein, a triggering condition for the core network node sending the key distribution message to the RNC+ is: after the core network node successfully completing one authentication and key agreement process, or after the core network node completing an update of the intermediate key, or when the core network node needing to change a security configuration, or after a user quitting an idle mode and establishing a radio resource control connection.

Wherein, the core network node is an enhanced serving general packet radio system support node, or an enhanced mobile switching center and an enhanced visitor location register.

Wherein, before the step of the core network node sending the intermediate key K_{ASMEU} to the RNC+ through the key distribution message, the method further comprises:
the core network node deriving the intermediate key K_{ASMEU} according to a generated parameter, and the generated parameter comprising a traditional ciphering key CK and a traditional integrity key IK.

Wherein, the generated parameter further comprises one of or any combination of the following parameters:
service network identifier, core network node type, sequence number, anonymity key and subscriber identifier.

Wherein, the existing parameter of the universal mobile telecommunication system network further comprises one of or any combination of the following parameters:
encryption algorithm identity, integrity algorithm identity, physical cell identifier of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

In order to solve the above problem, the present invention further provides an enhanced Radio Network Controller (RNC+), which comprises:
a key generating module, configured to: calculate a key according to an existing parameter of a universal mobile telecommunication system network, wherein, the existing parameter of the universal mobile telecommunication system network comprises a fresh random number (FRESH) generated by the RNC+.

The RNC+ further comprises :
a receiving module, configured to: receive an intermediate key K_{ASMEU} sent by a core network node through a key distribution message;
the key generating module being configured to calculate the key according to the following way: a ciphering key CKᵤ and an integrity key IKᵤ are calculated according to an intermediate key and the existing parameter of the universal mobile telecommunication system network.

The RNC+ further comprises :
the existing parameter of the universal mobile telecommunication system network used by the key generating module further comprising one of or any combination of the following parameters:
   encryption algorithm identity, integrity algorithm identity, physical cell identifier of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

In order to solve the above problem, the present invention further provides a core network device, which is configured to:
send an intermediate key K_{ASMEU} to an enhanced Radio Network Controller (RNC+) through a key distribution message, such that the RNC+ calculates a ciphering key CKᵤ and an integrity key IKᵤ according to an intermediate key and an existing parameter of a universal mobile telecommunication system network.

Wherein, the core network device is an enhanced serving general packet radio system support node; or an enhanced mobile switching center and an enhanced visitor location register.

Wherein, the core network node is further configured to: derive the intermediate key K_{ASMEU} according to a generated parameter, and a used generated parameter comprises: a traditional ciphering key CK and a traditional integrity key IK;
the generated parameter further comprises one of or any combination of the following parameters: service network identifier, core network node type, sequence number, anonymity key and subscriber identifier.

Regarding to the problem that the complexity increment exists in the derivation of the air interface key in HSPA+ security, the method for deriving the air interface key provided by the present invention does not need to introduce other parameters and it directly uses the existing UMTS network parameters to derive the air interface keys CKᵤ and IKᵤ. The present invention uses the existing parameters to perform a key deduction, which can not only solve the security problem of generating the key and improve the system security to reduce security risk, but it can also decrease system overhead and complexity to improve the user experience and the operational efficiency of the operators.

### Brief Description of Drawings

FIG. 1 is an architecture schematic diagram of the radio access network adopting HSPA+ technology according to the related art.
FIG. 2 is a hierarchy schematic diagram of the HSPA+ security key hierarchy according to the related art.
FIG. 3 is a signaling process example for updating the air interface key in radio communication system according to a specific embodiment.

### Preferred Embodiments of the Present Invention

A method for deriving an air interface key according to the present invention comprises: a RNC+ calculating a key according to an existing parameter of a universal mobile telecommunication system network, and the existing parameter of the universal mobile telecommunication system network comprising a fresh random number (FRESH) generated by the RNC+.

The embodiments of the present invention will be described in detail with reference to the accompany drawings below. It should be noted that the embodiments and the characteristics of the embodiments according to the present application can be optionally combined with each other in the condition of no conflict.

In the embodiments, a system for deriving an air interface key comprises: a core network node and a RNC+.

The core network node is configured to: send an intermediate key K_{ASMEU} to the RNC+ through a key distribution message. The core network node can be an enhanced serving general packet radio system support node (SGSN+); or an enhanced Mobile Switching Centre (MSC)/Visitor Location Register (VLR), namely, a MSC/VLR+.

The core network node is further configured to: derive the intermediate key K_{ASMEU}. In addition to a ciphering key CK and an integrity key IK, a used generated parameter also comprises one of or any combination of the following parameters: Public Land Mobile Network identifier (PLMN identifier), core network node type (including Circuit Switching (CS) or Packet Switching (PS)), Sequence Number (SQN), Anonymity Key (AK), and subscriber identifier (e.g., International Mobile Subscriber Identity (IMSI), Temporary Mobile Subscriber Identity (IMEI), or Radio Network Temporary Identifier (TMSI)). The SQN and AK are parameters respectively generated by the subscriber and home subscriber server in the process of authentication and key agreement.

The RNC+ is configured to: calculate a ciphering key CKᵤ and an integrity key IKᵤ according to the intermediate key K_{ASMEU} and the existing parameter of the universal mobile telecommunication system network.

The existing parameter of the universal mobile telecommunication system network used by the RNC+ comprises one of or any combination of the following parameters: fresh random number (FRESH) generated by the RNC+, encryption algorithm identity, integrity algorithm identity, Physical Cell Identifier (PCI) of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

In the embodiments, a method for deriving the air interface key comprises: a core network node sending an intermediate key K_{ASMEU} to a RNC+, and the RNC+ calculating the updated ciphering key CKᵤ and integrity key IKᵤ according to an intermediate key and an existing parameter of a universal mobile telecommunication system network.

The existing parameter of the Universal Mobile Telecommunication System (UMTS) network comprises one of or any combination of the following parameters: fresh random number (FRESH) generated by RNC+, encryption algorithm identity (enc-alg-ID), integrity algorithm identity (int-alg-ID), Physical Cell Identifier (PCI) of the RNC+, absolute frequency of the RNC+ (UMTS Absolute Radio Frequency Channel Number (UARFCN)), scrambling code allocated by the RNC+ to user equipment, subscriber identifier, RNC+ identifier, START parameter defined in universal mobile telecommunication system, integrity sequence number (COUNT-I) parameter defined in universal mobile telecommunication system, and radio link control sequence number (RRC SN) parameter defined in universal mobile telecommunication system.

Several examples of deriving the ciphering key CKᵤ and integrity key IKᵤ are given below, wherein, parameters in the brackets are arranged in random order and multiple parameters may be connected in a form of "∥":
CKᵤ = F2 (K_{ASMEU}, FRESH , enc-alg-ID) ,
and IKᵤ = F2 (K_{ASMEU}, FRESH , int-alg-ID) ;
or (CKᵤ, IKᵤ) = F2 (K_{ASMEU}, FRESH) ;
or (CKᵤ, IKᵤ) = F2 (K_{ASMEU}, PCI, UARFCN) ;
or (CKᵤ, IKᵤ) = F2 (K_{ASMEU}, PCI, UARFCN, ScramblingCode) ;
or CKᵤ = F2 (K_{ASMEU}, PCI, UARFCN, enc-alg-ID) ,
and IKᵤ = F2 (K_{ASMEU}, PCI, UARFCN, int-alg-ID) ;
or CKᵤ = F2 (K_{ASMEU}, START, enc-alg-ID) ,
and IKᵤ = F2 (K_{ASMEU}, START, int-alg-ID) ;
or CKᵤ = F2 (K_{ASMEU}, COUNT-I, enc-alg-ID) ,
and IKᵤ = F2 (K_{ASMEU}, COUNT-I, int-alg-ID) ;
or CKᵤ = F2 (K_{ASMEU}, RRC SN, enc-alg-ID) ,
and IKᵤ = F2 (K_{ASMEU}, RRC SN, int-alg-ID);
wherein, F is an arbitrary key derivation algorithm, such as it can be Key Derivation Function (KDF) algorithm defined by the 3GPP.

Wherein, the random number FRESH is a parameter which has been defined in the UMTS. The length of the random number is 32-bit. When a connection is established, the RNC (which is the Node B+ when it corresponds to the HSPA+) generates one random number FRESH for each subscriber, and it sends the random number FRESH to the subscriber through a safe mode command message. In the duration of the entire connection, the network and subscriber use the random number to calculate a message authentication code (MAC-I), which is used to protect the network from replay attack of subscriber signaling message.

Wherein, the parameter (START) is a parameter which has been defined in the UMTS, which is stored in the User Equipment (UE) and Universal Subscriber Identity Module (USIM) and used to manage the life cycle of ciphering key and integrity key, and the newly generated START value associated with key and the START parameter are initialized to be zero in ME and USIM in a successful process of authentication and key agreement. When the wireless connection is established, the user equipment establishes a completion message through the radio link control connection to send the value of the START parameter to the radio network controller. In the maintaining process of the wireless connection, the user equipment and the radio network controller increase the value of the parameter START according to the network rule. When the value of the START reaches a specified threshold, the key is invalid.

The length of the integrity sequence number (COUNT-I) is 32-bit, and composed of 4-bit RRC Sequence number (RRC SN) and 28-bit hyper frame number. The hyper frame number is increasing at each RRC SN periodically, and the RRC Sequence number (RRC SN) is increasing in each radio link control message under the integrality protection.

The Physical Cell Identifier (PCI) and absolute frequency of the RNC+ will be broadcast in a system broadcast message of the RNC+. The scrambling code allocated by the RNC+ to user equipment is obtained from the network side before the subscriber establishes a wireless connection with the network.

A triggering condition for the core network node sending the key distribution message to the RNC+ is: after the core network node successfully completing one process of authentication and key agreement, or after the core network node completing an update of the intermediate key, or when the core network node needing to change a security configuration, or after a subscriber quitting an idle mode and establishing a radio resource control connection. The core network node sends the intermediate key K_{ASMEU} to the RNC+ through the key distribution message (it can be a safe mode command message). The core network node is an enhanced serving general packet radio system support node; or an enhanced mobile switching center/visitor location register.

In addition to the ciphering key CK and integrity key IK, the generated parameter for the core network node deriving the intermediate key K_{ASMEU} also comprises one of or any combination of the following parameters: service network identifier (e.g., PLMN identifier), core network node type (TYPE, including the packet switching and circuit switching), Sequence Number (SQN), Anonymity Key (AK), subscriber identifier (e.g., IMSI, IMEI and TMSI); the SQN and AK are parameters respectively generated by the subscriber and home subscriber server in the process of authentication and key agreement.

Several embodiments of deriving the K_{ASMEU} are given below, wherein, parameters in the brackets are arranged in random order and multiple parameters may be connected in a form of "∥":
K_{ASMEU} = F1 (CK , IK , Type , SQN , AK) ;
or K_{ASMEU} = F1 (CK, IK, PLMN identifier, SQN, AK) ;
or K_{ASMEU} = F1 (CK, IK, PLMN identifier, Type, SQN, AK) ;
or K_{ASMEU} = F1 (CK, IK, Type , IMSI , SQN , AK) ;
or K_{ASMEU} = F1 (CK, IK, PLMN identifier, Type, IMSI, SQN, AK) ;
or K_{ASMEU} = F1 (CK, IK, PLMN identifier, SQN, AK) ;
or K_{ASMEU} = F1 (CK, IK, PLMN identifier, SQN) ;
or K_{ASMEU} = F1 (CK , IK, PLMN identifier, AK) ;
or K_{ASMEU} = F1 (CK, IK, SQN , AK) ;
or K_{ASMEU} = F1 (CK, IK, TYPE , AK) ;
wherein, F1 is an arbitrary key derivation algorithm, such as it can be KDF algorithm defined by the 3GPP.

The present invention will be described in detail with reference to the drawings and in combination with the embodiment below.

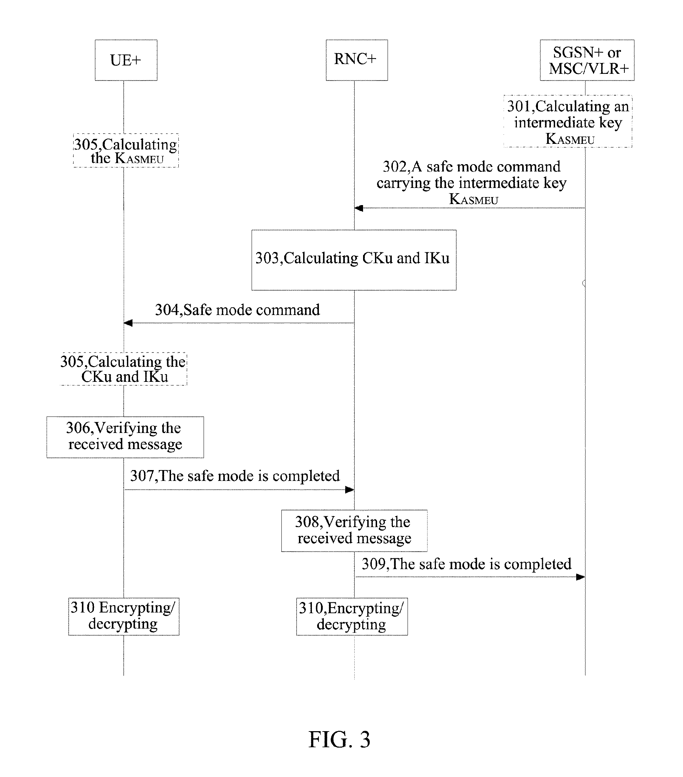

Specific embodiment:
The embodiment illustrates an example of the user equipment and base station distributing the air interface key through a safe mode command process as shown in FIG. 3. The ciphering key CKᵤ and integrity key IKᵤ of HSPA+ are generated at a RNC+. At the moment, SGSN+ or MSC/VLR+ need to send the K_{ASMEU} to the RNC+ through a safe mode command message. The steps will be described as follows.

In step 301, SGSN+ or MSC/VLR+ determines the permitted encryption algorithm set and integrity algorithm set, and calculates the K_{ASMEU} according to the ciphering key CK and integrity key IK received from the HSS.

The calculation method of K_{ASMEU} is the same as that in the embodiment, which will not be repeated here.

For the safe mode command process triggered by the mobility of user equipment in idle mode, this step is optional. If an effective K_{ASMEU} is still stored at the SGSN+ or MSC/VLR+, the K_{ASMEU} can be directly used and is not necessary to be re-calculated.

In step 302, SGSN+ or MSC/VLR+ sends a safe mode command message to the RNC+. The safe mode command message carries the K_{ASMEU}, and can also carry one of or any combination of the following parameters: user equipment security ability, key set identifier, and the selected integrity algorithm set and/or encryption algorithm set.

In step 303, the RNC+ generates a fresh random number FRESH after receiving the safe mode command message, and selects an integrity algorithm and/or encryption algorithm from the integrity algorithm set and/or encryption algorithm set. The RNC+ uses the parameters to calculate the integrity key IKᵤ and/or ciphering key CKᵤ of HSPA+ according to the K_{ASMEU}.

The calculation method of the integrity key IKᵤ and/or ciphering key CKᵤ is the same as that in the embodiment, which will not be repeated here.

In step 304, the RNC+ sends the safe mode command message to the user equipment.

The message carries a Message Authentication Code (MAC-I) calculated by using the IKᵤ, and also carries one of or any combination of the following parameters: user equipment security ability, key set identifier, and the selected integrity algorithm and/or encryption algorithm, and random number FRESH.

In step 305, the user equipment stores the encryption algorithm and integrity algorithm after receiving the safe mode command message, and calculates the K_{ASMEU} according to the ciphering key CK and integrity key IK generated in the AKA process (this process also takes place before receiving the safe mode command message), and calculates the ciphering key CKᵤ and integrity key IKᵤ of HSPA+ according to the K_{ASMEU}. The use of the parameters is the same as that in the generation embodiment of the integrity key IKᵤ and/or ciphering key CKᵤ. At the moment, the user equipment and RNC+ share the same integrity key IKᵤ and/or ciphering key CKᵤ, and may use the keys belong to the user equipment and RNC+ to protect communications between the two parties.

For the safe mode command process triggered by the mobility of user equipment in idle mode, if an effective K_{ASMEU} is still stored at the user equipment, the K_{ASMEU} can be directly used and is not necessary to be re-calculated.

In step 306, the user equipment uses the IKᵤ to verify the received safe mode command message.

In step 307, if the safe mode command message is successfully verified, the user equipment sends a safe mode completion message to the RNC+. The safe mode completion message carries the Message Authentication Code (MAC-I) calculated by using the IKᵤ, or it is encrypted by using the CKᵤ at the same time.

In step 308, the RNC+ uses the IKᵤ to verify the received safe mode completion message, or it firstly uses the CKᵤ to decrypt the message and then uses the IKᵤ to verify the received safe mode completion message.

In step 309, if the safe mode completion message is successfully verified, the RNC+ sends the safe mode completion message to the SGSN+ or MSC/VLR+. The message carries parameters: the selected integrity algorithm and/or encryption algorithm.

In step 310, hereafter, the user equipment and RNC+ can start the operation of encryption and decryption.

The present invention uses the existing parameters to perform a key deduction, which can not only solve the security problem of generating the key and improve the system security to reduce security risk, but also decrease system overhead and complexity to improve the user experience and the operational efficiency of the operators.

The embodiment further provides a core network device, which is configured to: send an intermediate key K_{ASMEU} to a RNC+ through a key distribution message, such that the RNC+ calculates a ciphering key CKᵤ and an integrity key IKᵤ according to an intermediate key and an existing parameter of a universal mobile telecommunication system network.

Wherein,
the core network device is an enhanced serving general packet radio system support node; or an enhanced mobile switching center and an enhanced visitor location register.

The core network node is further configured to: derive the intermediate key K_{ASMEU} according to a generated parameter and a used generated parameter comprises: a ciphering key CK_{U} and an integrity key IK_{U}.

Wherein, the generated parameter further comprises one of or any combination of the following parameters: serving network identifier, core network node type, sequence number, anonymity key and subscriber identifier.

The embodiment further provides a RNC+, which comprises:
a receiving module, which is configured to: receive an intermediate key K_{ASMEU} sent by a core network node through a key distribution message;
a calculating module, which is configured to: calculate a ciphering key CKᵤ and an integrity key IKᵤ according to an intermediate key and an existing parameter of a universal mobile telecommunication system network.

Wherein, the existing parameter of the universal mobile telecommunication system network used by the calculating module comprises one of or any combination of the following parameters:
fresh random number (FRESH) generated by the RNC+, encryption algorithm identity, integrity algorithm identity, physical cell identifier of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

The embodiment further provides an enhanced Radio Network Controller (RNC+), which comprises:
a key generating module, configured to: calculate a key according to an existing parameter of a universal mobile telecommunication system network, wherein, the existing parameter of the universal mobile telecommunication system network comprises a fresh random number (FRESH) generated by the RNC+.

The RNC+ can further comprise:
a receiving module, configured to: receive an intermediate key K_{ASMEU} sent by a core network node through a key distribution message;
the key generating module being configured to calculate the key according to the following way that: a ciphering key CKᵤ and an integrity key IKᵤ are calculated according to an intermediate key and the existing parameter of the universal mobile telecommunication system network.

Wherein, the existing parameter of the universal mobile telecommunication system network used by the key generating module can further comprise one of or any combination of the following parameters:
encryption algorithm identity, integrity algorithm identity, physical cell identifier of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

The ordinary person skilled in the art can understand that all or part of the steps in the above method can be completed by a program instructing related hardware, and the program can be stored in a computer readable memory medium, such as a read-only memory, magnetic disk or optical disk and so on. Alternatively, all or part of the steps of the above embodiments can also be implemented by using one or multiple integrated circuits. Correspondingly, each module/unit in the above embodiments can be implemented in a form of hardware, and can also be implemented in a form of software function module. The present invention is not limited to any combination of hardware and software in a specific form.

The above description is only the preferred embodiments of the present invention. The scheme of the present invention is not limited to HSPA+ system, and relevant modes of the scheme of the present invention can be applied in other wireless communication systems. The present invention can have various modifications and changes for those skilled in the art. All the modifications, equivalent substitutions, and improvements and so on within the spirit and principle of the present invention shall fall into the protection scope of the present invention.

### Industrial Applicability

The present invention can not only solve the security problem of generating the key and improve the system security to reduce security risk, but also decrease the system overhead and complexity to improve the user experience and the operational efficiency of the operators.

## Claims

1. A method for deriving an air interface key, comprising:
an enhanced Radio Network Controller (RNC+) calculating a key according to an existing parameter of a universal mobile telecommunication system network, and the existing parameter of the universal mobile telecommunication system network comprising a fresh random number (FRESH) generated by the RNC+.

2. The method according to claim 1, wherein,
before the step of the RNC+ calculating the key, the method further comprises: a core network node sending an intermediate key K_{ASMEU} to the RNC+ through a key distribution message;
the step of the RNC+ calculating the key comprises: the RNC+ calculating a ciphering key CKᵤ and an integrity key IKᵤ according to the intermediate key and the existing parameter of the universal mobile telecommunication system network.

3. The method according to claim 2, wherein,
the key distribution message is a safe mode command message.

4. The method according to claim 2, wherein,
a triggering condition for the core network node sending the key distribution message to the RNC+ is: after the core network node successfully completing one process of authentication and key agreement, or after the core network node completing an update of the intermediate key, or when the core network node needing to change a security configuration, or after a subscriber quitting an idle mode and establishing a radio resource control connection.

5. The method according to claim 2 or 3 or 4, wherein,
the core network node is an enhanced serving general packet radio system support node, or an enhanced mobile switching center and an enhanced visitor location register.

6. The method according to claim 2, wherein, before the step of the core network node sending the intermediate key K_{ASMEU} to the RNC+ through the key distribution message, the method further comprises:
the core network node deriving the intermediate key K_{ASMEU} according to a generated parameter, and the generated parameter comprising a traditional ciphering key CK and a traditional integrity key IK.

7. The method according to claim 6, wherein,
the generated parameter further comprises one of or any combination of following parameters:
service network identifier, core network node type, sequence number, anonymity key and subscriber identifier.

8. The method according to claim 1, wherein,
the existing parameter of the universal mobile telecommunication system network further comprises one of or any combination of following parameters:
encryption algorithm identity, integrity algorithm identity, physical cell identifier of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

9. An enhanced Radio Network Controller (RNC+), comprising:
a key generating module, configured to: calculate a key according to an existing parameter of a universal mobile telecommunication system network, wherein the existing parameter of the universal mobile telecommunication system network comprises a fresh random number (FRESH) generated by the RNC+.

10. The RNC+ according to claim 9, further comprising :
a receiving module, being configured to: receive an intermediate key K_{ASMEU} sent by a core network node through a key distribution message;
the key generating module being configured to calculate the key according to a following way: a ciphering key CKᵤ and an integrity key IKᵤ being calculated according to the intermediate key and the existing parameter of the universal mobile telecommunication system network.

11. The RNC+ according to claim 8, wherein,
the existing parameter of the universal mobile telecommunication system network used by the key generating module further comprises one of or any combination of following parameters:
encryption algorithm identity, integrity algorithm identity, physical cell identifier of the RNC+, absolute frequency of the RNC+, scrambling code allocated by the RNC+ to user equipment, subscriber identifier, RNC+ identifier, start parameter defined in universal mobile telecommunication system, integrity sequence number parameter defined in universal mobile telecommunication system, and radio link control sequence number parameter defined in universal mobile telecommunication system.

12. A core network device, configured to:
send an intermediate key K_{ASMEU} to an enhanced Radio Network Controller (RNC+) through a key distribution message, such that the RNC+ calculates a ciphering key CKᵤ and an integrity key IKᵤ according to the intermediate key and an existing parameter of a universal mobile telecommunication system network.

13. The device according to claim 12, wherein,
the core network device is an enhanced serving general packet radio system support node;
or an enhanced mobile switching center and an enhanced visitor location register.

14. The device according to claim 13, wherein,
the core network node is further configured to: derive the intermediate key K_{ASMEU} according to a generated parameter, and a used generated parameter comprises: a traditional ciphering key CK and a traditional integrity key IK;
the generated parameter further comprises one of or any combination of following parameters: service network identifier, core network node type, sequence number, anonymity key and subscriber identifier.
